# EUROPEAN PATENT APPLICATION

(11) **EP 4 087 287 A1**
(43) Date of publication of application: **09.11.2022**
(21) Application number: 21172111.3
(22) Date of filing: 04.05.2021
(51) Int. Cl.: H04W 4/06, H04L 29/06, H04N 21/266

(54) **NETWORK MANAGER AND METHOD**

(71) Applicant: Rohde & Schwarz GmbH & Co. KG, 81671 München (DE)
(72) Inventor: JANNER, Thomas, 82194 Gröbenzell (DE); OESTREICHER, Lars, 80538 München (DE); REITMEIER, Manfred, 84036 Landshut (DE); SINNHUBER, Johannes, 86916 Kaufering (DE); TAGA, Aziz, 81241 München (DE); UHLMANN, Maurice, 84427 St. Wolfgang (DE)
(74) Representative: Kehl, Ascherl, Liebhoff & Ettmayr Patentanwälte Partnerschaft mbB

(57) **Abstract**

The present disclosure provides a network manager comprising a data interface configured to communicatively couple to at least one radio access network of at least one broadcast network that is configured to wirelessly emit a load data signal, and to communicatively couple to at least one load data source network; and a load data monitor communicatively coupled to the data interface and configured to identify different load data sets with similar content in the at least one load data source network and to combine the identified load data sets into a combined load data; wherein the load data monitor is configured to provide the combined load data to the at least one radio access network for transmission in the load data signal of the at least one broadcast network. Further, the present disclosure provides a respective method.

## Description

### TECHNICAL FIELD

The disclosure relates to a network manager and a respective method.

### BACKGROUND

Although applicable to any combination of different networks, the present disclosure will mainly be described in conjunction with broadcast networks and cellular networks.

Today, the number of communication devices that are served in cellular networks increases steadily. One source of new communication devices is the increasing demand of users for mobile voice and data communication. Other sources of this increase are new applications, like Internet-of-Things or loT devices.

With an increasing number of communication devices, cellular networks become more and more complex. Consequently, the technical and financial efforts required for building and managing such networks continually increase.

There is a need for reducing these efforts.

### SUMMARY

The above stated problem is solved by the features of the independent claims. It is understood, that independent claims of a claim category may be formed in analogy to the dependent claims of another claim category.

Accordingly, it is provided:
A network manager comprising a data interface configured to communicatively couple to at least one radio access network of a single or multiple broadcast networks that is configured to wirelessly emit a load data signal, and to communicatively couple to at least one load data source network; and a load data monitor communicatively coupled to the data interface and configured to identify different load data sets with similar content in the at least one load data source network and to combine the identified load data sets into a combined load data; wherein the load data monitor is configured to provide the combined load data to the at least one radio access network for transmission in the load data signal of the at least one broadcast network.

Further, it is provided:
A method for managing a broadcast network, the method comprising identifying different load data sets with similar content in at least one load data source network; combining the identified load data sets into a combined load data; and providing the combined load data to at least one radio access network of the broadcast network for transmission in the load data signal of the broadcast network.

The present disclosure acknowledges the fact that serving more devices in cellular networks increases the complexity of the networks, since smaller cells need to be provided, or more capable transmitters need to be provided, to serve the increased number of devices. With increasing capabilities, the complexity and therefore also the costs for the transmitters raise. The same may apply to the power consumption of such transmitters. Operating the cellular network therefore becomes more demanding technically and economically.

When planning a cellular network, the operator of the network may estimate the average load on the cellular network and dimension the cellular network accordingly. However, when a cellular network is dimensioned for an average load, the cellular network may experience congestion and overload situations.

Such situations may for example arise when an important event, like a live sports event is viewed by many users on their mobile devices. The data stream comprising e.g., video and audio data for such a sports event, needs to be provided to all transceivers of the cellular network that currently serve at least one user that wants to view the event. In addition, users today expect a flawless experience, where the video and audio data is distributed with low latencies and high quality, an expectation that is difficult to meet, especially under high-load conditions.

This is especially true, since mobile cellular networks have been based, and still rely on a strong unicast communication model to provide various services to their end users. However, nowadays consumers find their comfort while watching a huge amount of premium content, of which a high percentage is live media services.

On the other hand, broadcast networks are well established for broadcast and multicast data transmission like TV and radio transmissions via digital video broadcast like DVB-T, for terrestrial transmission, or DVB-S, for satellite transmission. Since broadcast networks are usually designed to provide broadcast or multicast one-way data transmission, these networks may operate efficiently with any number of receiving devices. Further, since the area of coverage of a transmitter of a broadcast network is larger than the area of coverage of a transmitter of a cellular network, which is especially the case for satellite-based broadcast networks, the network infrastructure of broadcast networks is less complex to build and maintain than the infrastructure of cellular networks.

The present disclosure acknowledges that users will demand more and more services from cellular networks on their mobile devices that either require overprovisioning or may lead to congestion in the cellular networks. The present disclosure, therefore, provides means for effectively using the infrastructure provided by broadcast networks to provide data to devices that usually operate in cellular networks.

A cellular network in the context of the present disclosure may be a communication network providing bi-directional wireless communication for electronic devices, like user equipment such as mobile phones, also called UE, loT devices and the like. Usually, a cellular network is a distributed network comprising "cells", wherein each cell is served by at least one fixed-location transceiver. A site hosting the fixed-location transceivers may also be called a base station. A cellular network usually allows transmission of voice, video and audio data and other types of content. Neighboring cells usually use different sets of frequencies to avoid interference between the single cells. Mobile devices in the cellular network may perform a hand-over when moving from one cell to another. All cells together form the cellular network and provide radio coverage over a wide geographical area, wherein small local cells, e.g. indoor cells, are also possible. A cellular network in the context of the present disclosure may also comprise a satellite-based cellular network. Such a satellite-based cellular network may offer bidirectional communication to receiving devices in small cells with low flying satellites. Usually, such a satellite-based cellular network will comprise a large number of satellites. These types of satellite-based cellular network may be designed for unicast data communication.

The single transceivers of a cellular network are usually communicatively coupled to a common network, also called core network or backbone network. Data may be served to the transceivers from the common network and may be provided from the transceivers into the common network. It is understood, that the common network not necessarily is a single network, but may also comprise different network segments that may be communicatively coupled to each other via other networks, like e.g. the internet or dedicated backbone networks.

In cellular networks traditionally, a point-to-point communication is performed, like e.g. when a telephone call is conducted between to devices. In modern cellular networks like e.g., 5G networks, multicast transmissions are also possible. Due to the limited size of the single cells in a cellular network, the data to be transmitted in a multicast mode hast to be transmitted to every single transceiver via the common network.

In the context of the present disclosure, the operator of a cellular network may also be called the MNO or mobile network operator.

A broadcast network in the context of the present disclosure may be a one-way communication network that usually provides at least one of audio communication and/or video communication in a one-way or unidirectional fashion to electronic devices, like radio receivers or TV sets. It is understood, that a broadcast in the context of the present disclosure may be terrestrial broadcast network, a satellite broadcast network or a combination of both.

It is understood, that in the context of the present disclosure, a broadcast network may also provide communication to devices that are usually served by cellular networks. Further, in the context of the present disclosure a broadcast network is not limited to broadcast transmissions, but may also provide multicast transmissions. A broadcast transmission in this context is to be understood as a transmission to all receivers within reach of a single transmitter. A multicast transmission in this context is to be understood as a transmission to a limited group of receivers within reach of a single transmitter, instead of all receivers.

A broadcast network may be formed by a group comprising of at least one of a plurality of radio stations, a plurality television stations, or combined radio and television stations, or satellite stations. The term radio station refers to equipment for transmitting audio content wirelessly e.g., over the air. The term television station refers to equipment for transmitting audio and video content wirelessly e.g., over the air. The term satellite station refers generally to a satellite that is communicatively linked to a ground station and may be used as a radio access network or transmitter in the broadcast network.

It is understood, that for a broadcast network a common network, also called core network, may be provided that couples to the single transmitters, as explained above for cellular networks. If one or more satellites are part of the broadcast network, the respective ground stations may be communicatively coupled to the core network of the broadcast network. Since the area of coverage of a transmitter of a broadcast network is larger than the area of coverage of a transmitter of a cellular network, the common network needs to connect to a smaller number of transmitters and therefore usually is of lower complexity than the common network of a cellular network.

As explained above, the geographical area covered by each of the transmitters of a broadcast network is larger than the geographical area covered by each of the transmitters of a cellular network. In embodiments, the geographical area covered by each of the transmitters of a broadcast network may comprise an area larger than the geographical area covered by at least two transmitters of a cellular network, i.e. larger than two cells of the cellular network.

In examples, the area covered by a single terrestrial transmitter of a broadcast network may comprise a radius of about 1 km up to more than 100km. The area covered by a single transmitter of a cellular network may comprise a radius of up to 35 km. At the same time, the transmitting power of a transmitter in a broadcast network may range up to 20 kW. In cellular networks, the transmitting power of the respective transmitters may range up to 500 Watts. Further, the transmitters in broadcast networks will usually use other frequencies than the transmitters in cellular networks. The transmitters in the broadcast networks may for example use frequencies in the UHF band, for example between 470 MHz and 698 Mhz.

For satellites as transmitters, the size of the area of coverage may be size of the full earth globe, and the transmission power may be between 20W and 300W (depending on the bands and the usage).

Exemplary standards used in broadcast networks may comprise DVB-based protocols, especially DVB-T and DVB-S based protocols, ATSC-based protocols, and 5G for broadcast networks or any future broadcast network standard. In cellular networks, the respective standards like UMTS, LTE and 5G or any future cellular network protocol may be used.

In the context of the present disclosure, the operator of a broadcast network may also be called the BNO or broadcast network operator.

The cellular networks and the broadcast networks mentioned in the present disclosure may comprise so called radio access networks or RANs and core networks or CNs. A RAN or Radio Access Network provides a radio access technology, and usually resides between a user device and the respective CN. A RAN in the context of the present disclosure may comprise the base station with respective antennas and a connection to the CN, and/or a satellite with connection to the CN via a respective ground station.

The radio access networks, also called RANs, and core networks, also called CNs, mentioned in the present disclosure are not limited to a specific type of network. Nevertheless, in the present disclosure a RAN with regard to cellular networks may comprise at least one of a GRAN, also GSM radio access network, a GERAN, which is essentially the same as GRAN but specifying the inclusion of EDGE packet radio services, a UTRAN, also called UMTS radio access network, and an E-UTRAN, the Long Term Evolution (LTE) high speed and low latency radio access network, or a RAN according to any upcoming RAN standard, or satellite-based RAN.

Accordingly, in the present disclosure a RAN with regard to a broadcast network may comprise any technology that allows transmitting data in a broadcast or multicast manner to electronic devices. Such a RAN may for example comprise a DVB-T transmitter with respective antennas and a connection to the respective core network, or a satellite as DVB-S transmitter with respective antennas and a connection to the respective core network via the ground station of the satellite.

Possible RANs comprise, but are not limited to, multi-frequency network or MFN RANs, single frequency network or SFN RANs, and SC-PTM RANs, also called Single-Cell - Point-to-Multipoint RANs. The RANs in the context of the present disclosure may for example comprise so called LPLT transmitters, also called low-power low-tower transmitters, HPHT transmitters, also called high-power high-tower transmitters, MPMT transmitters, which are a hybrid transmitter combining elements of LPLT and HPHT transmitters. MPMT stands for Medium Power Medium Tower. MPMT transmitters may have an output power that comes in between LPLT and HPHT, e.g. 350W - 6KW, which automatically results in a coverage capability between those of LPLT and HPHT, e.g. 5KM - 30KM, depending on the specific deployment scenarios and other parameters. Further, a RAN in the context of the present disclosure may comprise at least one transmitter with a fixed geographical location. As explained above, a transmitter for a broadcast network may comprise a transmitting power of up to 20kW or more, and cover an area of more than 100km radius.

The term core network in the context of the present disclosure refers to a network that couples to the RANs of the respective network. Core networks are sometimes also referred to as backbone networks. It is understood, that any networking technology, like cable-based ethernet, optical fiber-based ethernet, or other network technologies may be used to transmit data in the core network to and from the RANs. The core network may further comprise connections to other networks, like the networks of content providers or the like.

It is understood, that radio access networks and core networks in the context of the present disclosure may comprise further elements, like network connections, network switches, network hubs, servers, and the like.

The present disclosure acknowledges, as indicated above, that data may be offloaded from load data source networks, like cellular networks, to a broadcast network. To support offloading of load data to the broadcast network, the present disclosure provides the network manager. In the context of the present description load data that comprises related content and is provided from a single load data source may also be called a load data set. Two load data sets may therefore be provided by different load data source networks, although they may comprise similar content. Multiple load data sets may therefore also be called simply load data or pieces of load data.

The network manager comprises a data interface that communicatively couples a network controller to at least one radio access network of the broadcast network and at least one load data source network. Such a load data source network may be the core network of the broadcast network, or a content provider network. A core network usually transports load data to the radio access networks for emission in a load data signal to the receiving devices.

It is understood, that a load data source network and the radio access networks may be operated by the same operator. The network controller may therefore be coupled via a single network to a load data source network and the radio access networks. Communicatively coupled in this context refers to the data interface being capable of communicating with the respective entity, while a direct network connection or indirect network connection e.g., via other networks like the internet, is possible. Further, the data interface may comprise a single hardware interface or multiple hardware interfaces.

In other examples, the load data source network and the radio access networks may be operated by different operators and may not be provided in the same network. The data interface in such an example may communicatively couple to the different operators' networks as required directly or indirectly via a single or multiple hardware interfaces.

The network manager of the present disclosure may be provided in the broadcast network. In such an embodiment the data interface may be an internal interface in the broadcast network. The network manager may for example be provided as dedicated element, like a server in the broadcast network. Such a server may be communicatively coupled to the core network of the broadcast network via a hardware-based data interface, like an Ethernet interface. The network manager may also be provided as an additional function in a server that is already present in the core network. Such a network manager may for example be provided as software application in the server or a function of a firmware or operating software of the server. Such a network manager may comprise the data interface as a software-based interface, like an API, or as a combination of a software-based and hardware-based interface.

The broadcast network comprises a core network that is communicatively coupled to at least one radio access network. It is understood, that the broadcast network may comprise any number of radio access networks that may all be coupled, directly or indirectly, to the core network. The single radio access networks may be distributed over a specific geographical area like e.g., a country or simply the area of operation of a network operator that operates the broadcast network. The core network distributes load data or a respective load data set to the radio access networks that is to be distributed or emitted via the radio access networks. It is understood, that the core network may comprise routing mechanisms that allow transmitting specific load data sets only to those radio access networks that should emit the load data or load data sets in respective load data signals. It is understood, that the load data or load data set refers to the content or content data that is to be transmitted to receiving devices. Such load data or load data sets may comprise video data, audio data, software update data, or any other type of data that is to be transmitted.

It is understood, that the core network may comprise a respective interface or respective interfaces that allow operators of cellular networks or other content providers to provide the load data to the core network. Such interfaces may comprise hardware-based network interfaces, API-based or software-based interfaces, or a combination of both. The core network may for example be coupled via a hardware interface to a network of a content provider or cellular network operator directly or indirectly. The load data may be provided to the core network via an upload functionality that is provided by the core network. It is understood, that such an upload functionality may comprise security measures, like e.g. authentication and encryption. In embodiments, the core network may for example comprise one or more FTP or HTTP(S) servers, that allow a content provider to upload the load data. In case of live streaming data, the core network may also provide a streaming endpoint, that accepts the load data in the form of a stream for further processing in the core network. In other embodiments, the broadcast network e.g., the network controller mentioned below or other elements of the core network, like a data loader, may be configured to retrieve the load data from a location that may be indicated by the provider of the load data.

The network manager comprises the load data monitor that identifies different load data with the similar content. In this context the expression "similar content" refers to actual content of the load data being the same, independent of any technical parameters of how the content is provided. Similar content may for example comprise the same audio content and/or video content but in different resolutions, encodings, or the like. The similar content may therefore differ in at least one parameter regarding quality, encoding, or the like.

For example, one content provider may provide load data showing video footage of a soccer match in 4K resolution. Another content provider may provide load data showing the same video footage of the soccer match, but in full-HD resolution. These two different sets of load data in the context of the present disclosure may be seen as comprising the similar content. The same applies to video footage that comprises the same resolution but is different in other aspects. For example, a first set of load data may comprise video footage provided in 4k resolution encoded with a first video codec. A second set of load data may comprise the same video footage also in 4K resolution, but encoded with a different codec. Technically, the data streams will be different but still show the similar content.

This situation may for example arise, if two content providers own the rights to serve video footage of certain events, like for example soccer matches, race events or other sports events, live concerts or the like. These content providers may want to transmit video footage of the same event to their subscribers and may therefore want to offload the respective load data to a broadcast network to save on transmission costs in their own unicast-based network, like for example a cellular network.

The above may also be applied to audio streams, or pure data-comprising load data. For example, an audio stream may be provided by different sets of load data in different audio qualities i.e., with different sample rates, resolutions and bitrates. In the context of the present disclosure such sets of load data may comprise the similar content.

If pure data is provided, for example to provide a software update to loT devices, different load data may comprise the updated software e.g., compressed differently. Such sets of load data in the context of the present disclosure may also comprise the similar content.

The load data monitor may perform the identification of load data with similar content by comparing the content. For video footage, the load data monitor may for example use image recognition algorithms to identify similar content. For audio content, the load data monitor may use respective sound recognition algorithms. The load data monitor may also use metadata regarding the load data. Such metadata may be provided by the provider of the load data and may provide a description of the content of the load data that allows identifying similar content.

If the load data monitor identifies load data comprising the similar content, the load data monitor will combine the different load data into a combined load data and provide the combined load data to the radio access networks, either directly via the data interface, or indirectly e.g., via the load data source network. The radio access networks instead of transmitting the original load data, will now only transmit the combined load data in the load data signal. It is understood, that the load data monitor may also inform the core network of a broadcast network accordingly. The core network may then stop delivering the original load data to the radio access networks. The load data monitor may also provide the combined load data to the core network for transmission to the radio access networks.

The load data monitor serves for identifying potential candidates of load data that may be combined and, consequently, reduces the consumption of networking resources, and especially RF resources, in the broadcast network.

A broadcast network in the context of the present disclosure is capable of dynamically receiving the load data from e.g., a cellular network, and of transmitting the load data to electronic devices, that usually receive the load data via the cellular network. Instead of by a cellular network, the load data may also be provided directly by a content distribution network or other content providers.

Further, by combining load data that comprises the similar content, the load on the broadcast network may be reduced to the necessary minimum. At the same time it is possible to provide the offloading service to different content providers that want to offload the similar content.

Further embodiments of the present disclosure are subject of the further dependent claims and of the following description, referring to the drawings.

In an embodiment, the load data monitor may be configured to combine the identified load data sets into a single load data stream.

The single load data stream may also be called a unicast stream or multicast stream. The load data monitor, therefore, provides the effect that instead of two load data sets only the single load data stream is transmitted in the respective networks.

In another embodiment, the data interface may be configured to communicatively couple to at least two different load data source networks, wherein the load data monitor may be configured to identify load data comprising similar content in the two different load data source networks.

The load data monitor may not only identify load data with the similar content in a single load data source network, like the core network of a broadcast network. Instead, the load data monitor may also be communicatively coupled to multiple other networks that provide the load data i.e., to different content provider networks. The load data monitor may then identify the load data with similar content in all networks to which the load data monitor is communicatively coupled.

If for example, one content provider provides video footage of a live event to the broadcast network, and a second content provider transmits the same video footage in his own network, the load data monitor may identify this situation. Consequently, the two different content providers may be provided with an indication that it would be possible to combine the load data. The load data monitor in such situations may lead to a reduced overall network load in the broadcast network and the content provider networks.

The load data monitor may be communicatively coupled to the load data source networks and may receive the load data that is transmitted in the load data source networks for identification of similar content. In addition or as alternative, the load data monitor may also receive load data schedules via the data interface, that comprise the load data schedules of the content provider networks. The load data monitor may then identify load data of similar content by comparing the load data schedules. It is understood, that for load data in the broadcast network e.g., the respective core network, a load data schedule may also be provided for comparison with the other load data schedules. Such load data schedules may comprise e.g., the metadata as mentioned above.

In a further embodiment, the load data monitor may be configured to provide a data offloading request to the at least two load data source networks if load data with similar content is identified. The load data monitor may be configured to combine the identified load data into a combined load data, and to provide the combined load data to the at least one radio access network, if an acknowledgment is received by the load data monitor in response to the data offloading request.

In cases where the load data monitor identifies load data with similar content, especially in different load data source networks, like e.g. in the core network and a content provider network, or in two different content provider networks, the load data monitor may provide a respective data offloading request to the operators of the respective content provider networks.

The operators of the content provider networks may for example not be aware of the synergies that may be leveraged by combining the load data, and may be informed via the data offloading request.

If the respective operator or operators accept the data offloading request and provide a respective response to the load data monitor, the load data monitor may combine the respective load data into the combined load data for transmission via the radio access networks.

It is understood, that the operator of the broadcast network may provide an incentive to the operators of the content provider networks. Usually, the operator of the broadcast network will charge the operators of the content provider networks for load data they offload into the broadcast network.

In cases, where load data may be combined, the operator of the broadcast network may reduce the price for offloading of the load data for the single operators of content provider networks. The reduction may still be chosen such, that the overall price for all operators is higher than the price for a single operator for offloading load data with combining the load data.

In other embodiments, the load data monitor may monitor the content provider networks for any type of load data that may be offloaded, instead of monitoring only for load data with similar content. The load data monitor may for example monitor for load data that is transmitted via a content provider network to many receiving devices at the same time. If such load data is identified, the load data monitor may provide the data offloading request to the operator of the respective content provider network. As explained above, the load data monitor may identify such load data by analyzing the load data or by analyzing a respective load data schedule. The operators of content provider networks may actively be triggered by the load data monitor to offload load data, instead of waiting in the broadcast network for the operators of the content provider networks to offload data.

In such embodiments, the load data monitor may also monitor the broadcast network, especially the core network of the broadcast network, for broadcast load data that may be offloaded into a cellular network. This may for example be advantageous if the broadcast network is suffering congestion or technical defects and the load data in the broadcast network should be reduced or the broadcast load data is important to be transmitted, such as for example disaster warnings or the like. In such an embodiment, the broadcast network may receive the usual broadcast load data that is to be distributed usually via the broadcast network. The load data monitor may then identify at least parts of the broadcast load data that are suitable for offloading. The load data monitor may also identify situations in which offloading of such load data is necessary or advantageous and initiate the offloading of broadcast load data. Further, the broadcast network may also receive unicast load data from a respective source apart from the broadcast load data. In such an embodiment, the radio access networks of the broadcast network may still transmit the broadcast load data. The load data monitor may, however, offload the unicast load data to a respective cellular network.

The load data to be offloaded may also be indicated by the provider of the load data via respective metadata, for example a data rate, a position of the receiving device, or a time to transmit. Alternatively, the load data monitor may identify such load data based on a request by the provider of the load data, or based on the content of the load data.

For offloading identified broadcast load data or the unicast load data the load data monitor may provide a respective request to the cellular network for offloading the respective load data. Further, the load data monitor may amend the broadcast load data that is transmitted via the broadcast network with an indication or information regarding the offloaded data that may be received via the cellular network. This indication or information may for example switch receiving devices of the broadcast network into a parallel receiving mode that allows them to receive the broadcast load data and the unicast load data via two different networks.

The load data monitor may also synchronize the broadcast network and the cellular network, such that the load data is transmitted synchronized or aligned via both networks. Synchronized or aligned may for example mean, that the load data transmitted via the broadcast network and the load data transmitted via the cellular network are received at the receiving device in predefined time slots.

In yet another embodiment, the load data monitor may be configured to combine the load data with similar content by selecting one of the identified load data and providing the selected load data as combined load data.

As explained above, the load data may comprise the similar content for example with different resolutions or the similar content encoded with different encoding algorithms.

The load data monitor may combine the different load data by simply providing a single identified load data as the combined load data. The combination of load data may in such an embodiment be performed with only little effort.

The decision about which load data should be provided as combined load data may be based on different criteria.

The load data monitor may for example chose the load data that provides the best user experience. In case of video or audio content this may be the content with the best quality i.e., the highest resolution, framerate, and the like. In case of general data or software updates, this may be the load data with the highest compression and reduced size, that may be transmitted to the receiving devices the quickest.

In other cases, the load data monitor may be informed by the providers of the load data about the capabilities of the respective receiving devices and may chose the load data accordingly. If for example, the load data monitor is informed that some of the receiving devices are not capable of decoding video data that is encoded using a specific video codec, the load data monitor may chose a load data that comprises the video data encoded with another video codec.

The load data monitor may also comprise an artificial intelligence-based combiner for combining the load data. Such an artificial intelligence-based combiner may for example be trained based on training load data and manually chosen combinations of the training load data or on historical combinations of load data. In embodiments, a limited memory artificial intelligence algorithm may be used.

In an embodiment, the network manager may comprise a data transcoder communicatively coupled to the load data monitor and configured to transcode load data. The load data monitor may be configured to combine the load data with similar content by providing the load data with similar content to the transcoder for transcoding the identified load data and by providing the transcoded load data as combined load data.

The data transcoder may be capable of performing different types of transcoding. The data transcoder may for example transcode an audio stream i.e., encode the audio in the audio stream with a different audio codec and/or different encoding parameters. The data transcoder may also transcode a video stream i.e. encode the video in the video stream with a different video codec and/or different encoding parameters. The data transcoder may also transcode other types of load data for example by recompressing the load data with a different compression algorithm or other compression settings.

It is understood, that when transcoding of load data is mentioned here, this also includes transcoding of single streams provided in the respective load data, like only a video stream or only an audio stream.

In another embodiment, the load data monitor may be configured to combine the load data with similar content by separating in every load data different data streams of different stream types, and by selecting for a first stream type one of the data streams and providing the selected data stream in the combined load data and for the other stream types providing all data streams in the combined load data.

The load data monitor may identify different load data with the similar content also, if only one of the streams in the different load data comprises the similar content.

For example, different content providers may transmit video footage of an event, but provide their own audio stream with the same video footage. This may for example be the case if different operators transmit video footage of a live event, or if different operators provide the audio in different languages or the like.

In such cases, the load data monitor may identify different load data to comprise the similar content, if only one of the streams in the load data comprises the similar content, e.g. the video stream.

The load data monitor may then combine the load data by providing this stream with the similar content only once in the combined load data, and by providing all other streams comprising different content in the combined load data.

In this regard the term "stream" may also refer to multiple streams of the same type that are overlaid over each other. For example, the load data may comprise video footage, where a first video stream is a recorded video stream, and where an overlaid video is provided in a second video stream. Such an overlaid video may for example comprise fade-ins or overlays of the respective content provider. The load data monitor may in such cases also identify that only the first video stream comprises similar content as other video streams in other load data.

In the receiving devices such a combined load data may be separated into the single streams, and the receiving device may use the streams that are relevant for the respective receiving device.

In the example of live video footage of an event, all receiving devices may use the single video stream and output the audio of the stream that their content provider provided.

In a further embodiment, the load data monitor may be configured to combine the load data with similar content section wise, and to provide combined load data for combination sections and the original load data for non-combination sections.

Combining the content section wise refers to defining different sections of the load data that may be combined differently. If the load data comprises video or audio footage, the provider of the load data may for example define sections that may be combined, so called combination sections, and sections that may not be combined and should be transmitted without any change, so called non-combination sections.

This may be the case, if the content provider at least for specific time intervals provides exclusive video footage. The content provider may for example provide a talk between experts and commentators during a soccer match or race event, that he wants to transmit to the receiving devices in any case. The content provider may for example also provide commercials that should be transmitted in any case.

It is understood, that instead of being provided with identifications of the combination sections and the non-combination sections, the load data monitor may also identify these sections when receiving the load data. Obviously, if a content provider provides his own exclusive content at least at some points during a live event, the load data monitor will notice that the load data does not comprise the similar content. The load data monitor may reserve respective load data resources for transmission of such exclusive content.

In a further embodiment, the load data monitor may be configured to adjust load data information for the load data when combining the load data. The load data information refers especially to at least one of a load data quality, a frequency or frequency range or bandwidth of the load data signal, a data rate of the load data signal, and a target application on the receiving device.

The load data information may be seen as a kind of metadata for the load data that indicates technical or non-technical aspects of the load data.

The receiving devices may require the load data information to correctly reproduce the load data. If the combined load data for example comprises a single video stream but multiple audio streams, the load data information may indicate to the receiving devices, which audio stream is the audio stream provided by their content provider.

The load data information may also indicate a load data quality. It is understood, that every load data provider may define the load data information individually. For example, one load data provider may limit the load data quality of a video stream to a predefined maximum resolution, while another load data provider may allow maximum resolution for the respective receiving devices.

If a receiving device pertains to the content delivery network of the first content provider, the video may then be shown to a user with the limited resolution, like e.g. 720p resolution. The receiving devices of the other content delivery networks may instead show the video in full-HD or 4K resolution.

If such limitations would not be enforced in the receiving devices, the load data monitor could not combine the respective load data, because the receiving devices of the first content provider could display the video in higher resolution than allowed. It is understood, that if the limitations are enforced in the receiving devices, the load data monitor may combine such load data anyways.

The present disclosure is also meant to expressly disclose a broadcast network comprising the network manager. Such a broadcast network may comprise at least one radio access network, and a network manager. Of course such a broadcast network may also comprise a core network and may be in communication with one or more load data source networks.

### BRIEF DESCRIPTION OF THE DRAWINGS

For a more complete understanding of the present disclosure and advantages thereof, reference is now made to the following description taken in conjunction with the accompanying drawings. The disclosure is explained in more detail below using exemplary embodiments which are specified in the schematic figures of the drawings, in which:
Figure 1 shows a schematic diagram of an embodiment of a network manager according to the present disclosure, a load data source network and a broadcast network;
Figure 2 shows a schematic diagram of another embodiment of a network manager according to the present disclosure, a load data source network and a broadcast network;
Figure 3 shows a schematic diagram of another embodiment of a network manager according to the present disclosure, a load data source network and a broadcast network; and
Figure 4 shows a flow diagram of an embodiment of a method according to the present disclosure.

In the figures like reference signs denote like elements unless stated otherwise.

### DETAILED DESCRIPTION OF THE DRAWINGS

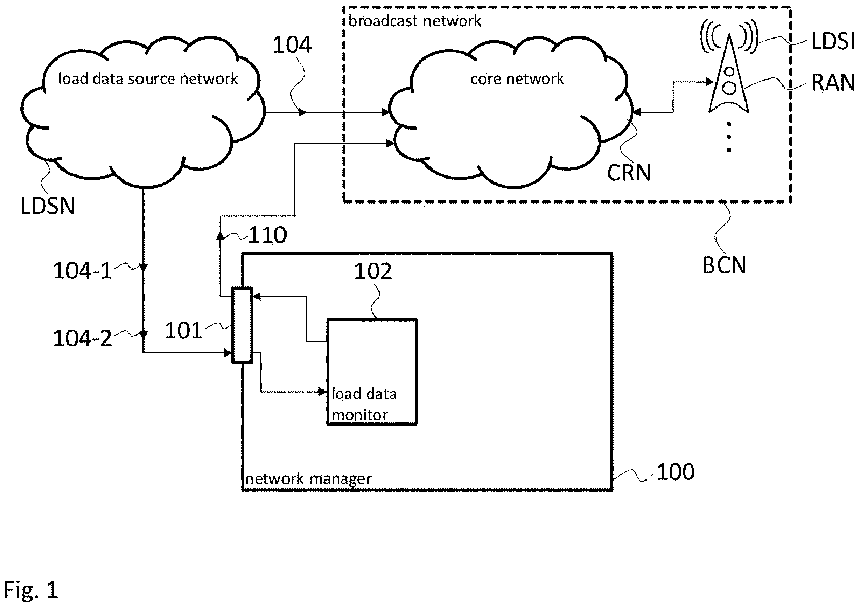

Figure 1 shows a schematic diagram of a network manager 100 together with a load data source network LDSN and a broadcast network BCN.

The load data source network LDSN may be the network of a load data provider, like for example a streaming media service. It is understood, that the load data source network LDSN may comprise data storages, network devices and any other element required to provide the respective services offered by the load data source network LDSN.

The broadcast network BCN comprises a core network CRN that is communicatively coupled to a plurality of radio access networks RAN that emit wireless load data signals LDSI. Forsake of clarity, only one radio access network RAN is shown, and more radio access networks RAN are hinted at by three dots. It is understood, that the broadcast network BCN may comprise any number of radio access networks RAN distributed over the area of operation of the operator of the broadcast network BCN. Usually, the core network CRN provides load data 104 to the radio access networks RAN for transmission to receiving devices in the load data signals LDSI. The load data 104 may be provided from the load data source network LDSN to the core network CRN directly. With the network manager 100, instead of the load data 104 the combined load data 110 may be provided to the radio access networks RAN instead.

In embodiments, the load data source network LDSN may be implemented as the core network CRN. In such embodiments, the load data 104 may be provided from any other source to the core network CRN or the network manager 100. Further, it is understood, that the above-presented explanations regarding load data source networks and broadcast networks may be applied to the load data source network LDSN and the broadcast network BCN.

In addition, in other embodiments, the network manager 100 may be provided as component of the load data source network LDSN or as component of the broadcast network BCN, especially of the core network CRN.

The network manager 100 comprises a data interface 101 that is internally communicatively coupled to a load data monitor 102. Externally, the data interface 101 is communicatively coupled to the load data source network LDSN and to the broadcast network BCN.

The load data monitor 102 identifies different load data sets 104-1, 104-2 with similar content in the at least one load data source network LDSN. To this end, the load data monitor 102 may receive the load data sets 104-1, 104-2 from the load data source network LDSN. Alternatively, the load data monitor 102 may also receive metadata regarding the load data sets 104-1, 104-2 from the load data source network LDSN that allows the load data monitor 102 to identify load data sets 104-1, 104-2 of similar content.

After identifying load data sets 104-1, 104-2 of similar content, the load data monitor 102 combines the identified load data sets 104-1, 104-2 into a combined load data 110 and provides the combined load data 110 for transmission via the radio access networks RAN. The network manager 100 is communicatively coupled to the core network CRN for providing the combined load data 110 indirectly to the radio access networks RAN. It is understood, that the network manager 100 may also provide the combined load data 110 to the load data source network LDSN or to the radio access networks RAN instead.

The data interface 101 may also communicatively couple to at least two different load data source networks LDSN. In such cases, the load data monitor 102 may identify load data comprising similar content in the two different load data source networks LDSN.

The load data monitor 102 may for example combine the load data with similar content by selecting one of the identified load data sets 104-1, 104-2 and providing the selected load data set 104-1, 104-2 as combined load data 110.

The load data monitor 102 may also combine the load data with similar content by separating in every load data set 104-1, 104-2 different data streams of different stream types, and selecting for a first stream type one of the data streams and providing the selected data stream in the combined load data 110 and for the other stream types providing all data streams in the combined load data 110.

The load data monitor 102 may also combine the load data with similar content section wise. In this case, the load data monitor 102 may provide combined load data 110 for combination sections and the original load data for non-combination sections.

In addition, the load data monitor 102 may adjust load data information for the load data sets 104-1, 104-2 when combining the load data. The load data information may for example refer to at least one of a load data quality, a frequency or frequency range or bandwidth of the load data signal LDSI, a data rate of the load data signal LDSI, and a target application on the receiving device.

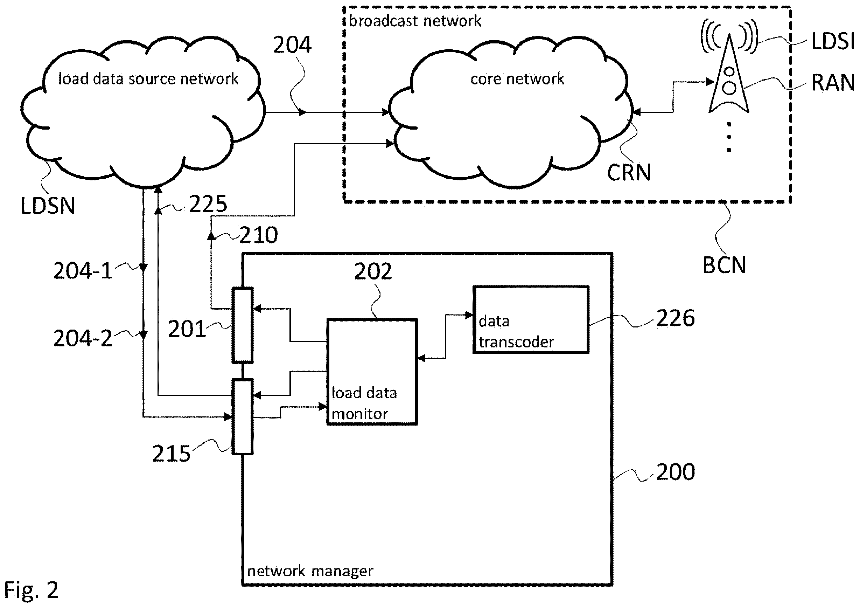

Figure 2 shows another a network manager 200 with a load data source network LDSN and a broadcast network BCN. The above explanations regarding the load data source network LDSN and the broadcast network BCN apply mutatis mutandis.

The network manager 200 is based on the network manager 100, and therefore comprises a data interface 201 that is internally communicatively coupled to a load data monitor 202. Externally, the data interface 201 is communicatively coupled to the broadcast network BCN and the core network CRN. The above-presented explanations regarding the load data manager 100 also apply to the load data manager 200 mutatis mutandis.

The network manager 200 further comprises a control interface 215 that is internally communicatively coupled to the load data monitor 202, and that is externally accessible via any data network, for example the internet. The control interface 215 is communicatively coupled to the load data source network LDSN. Further, the control interface 215 may for example comprise a web-based user-accessible interface, an API-based machine-accessible interface, a RESTful interface, an XML-based or JSON-based interface, and a client-program-based interface. It is understood, that the control interface 215 may also be provided as element of the data interface 201. The control interface 215 may serve as easily accessible interface for exchanging data between the network manager 200, and the provider of the load data sets 204-1, 204-2.

Further, the network manager 200 comprises a data transcoder 226 communicatively coupled to the load data monitor 202. The data transcoder 226 serves for transcoding load data. The load data monitor 202 may combine the load data with similar content by providing one of the load data sets 204-1, 204-2 with similar content to the data transcoder 226 for transcoding the identified load data and by providing the transcoded load data as combined load data 210.

It is understood, that the load data monitor 202 may be communicatively coupled to two or more load data source networks LDSN. The load data monitor 202 may in such cases provide a data offloading request 225 to the at least two load data source networks LDSN if load data with similar content is identified. The load data monitor 202 may then combine the identified load data into a combined load data 210 and provide the combined load data 210 to the radio access networks RAN, if an acknowledgment is received by the load data monitor 202 in response to the data offloading request 225.

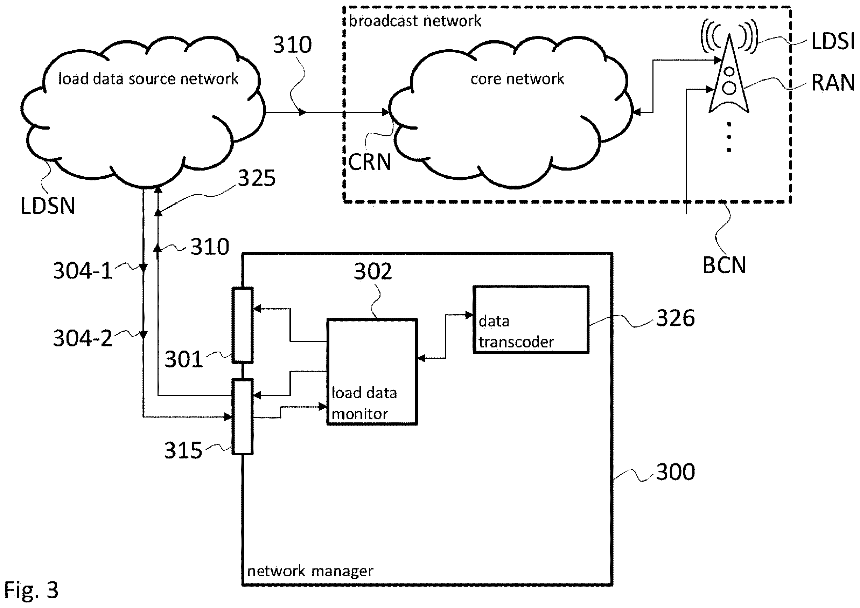

Figure 3 shows another network manager 300. The network manager 300 is based on the network manager 200, and therefore comprises a data interface 301 that is internally communicatively coupled to a load data monitor 302. Externally, the data interface 301 may for example be communicatively coupled to the broadcast network BCN and the core network CRN to exchange data with these networks when required.

The network manager 300 also comprises a control interface 315 that is internally communicatively coupled to the load data monitor 302. Externally, the load data interface 315 is communicatively coupled to the load data source network LDSN.

The above-presented explanations regarding network manager 200 and its elements apply mutatis mutandis to network manager 300 and its elements.

In contrast to the arrangement of figure 2, in figure 3 the network manager 300 does not provide the combined load data 310 to broadcast network BCN. Instead, the network manager 300 provides the combined load data 310 to the load data source network LDSN. The load data source network LDSN may then provide the combined load data 310 to the broadcast network BCN.

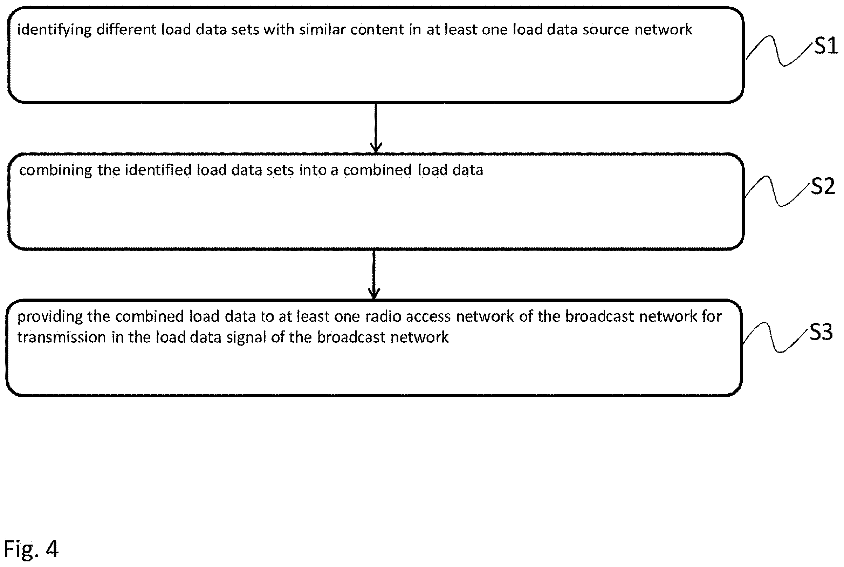

For sake of clarity in the following description of the method-based Fig. 4 the reference signs used above in the description of apparatus based Figs. 1 - 3 will be maintained.

Figure 4 shows a flow diagram of a method for managing a broadcast network BCN.

The method comprises identifying S1 different load data sets 104-1, 104-2, 204-1, 204-2, 304-1, 304-2 with similar content in at least one load data source network LDSN. Further, the method comprises combining S2 the identified load data sets 104-1, 104-2, 204-1, 204-2, 304-1, 304-2 into a combined load data 110, 210, 310. The method further comprises providing S3 the combined load data 110, 210, 310 to at least one radio access network RAN of the broadcast network BCN for transmission in the load data signal LDSI of the broadcast network BCN.

Although specific embodiments have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

### LIST OF REFERENCE SIGNS

- 100, 200, 300: network manager
- 101, 201, 301: data interface
- 102, 202, 302: load data monitor
- 104-1, 104-2, 204-1, 204-2, 304-1, 304-2: load data set
- 110, 210, 310: combined load data

- 225, 325: data offloading request
- 226, 326: data transcoder

- RAN: radio access network
- LDSI: load data signal
- BCN: broadcast network
- CRN: core network
- LDSN: load data source network

- S1, S2, S3: method step

## Claims

1. Network manager (100, 200, 300) comprising:
a data interface (101, 201, 301) configured to communicatively couple to at least one radio access network (RAN) of at least one broadcast network (BCN) that is configured to wirelessly emit a load data signal (LDSI), and to communicatively couple to at least one load data source network (LDSN); and
a load data monitor (102, 202, 302) communicatively coupled to the data interface (101, 201, 301) and configured to identify different load data sets (104-1, 104-2, 204-1, 204-2, 304-1, 304-2) with similar content in the at least one load data source network (LDSN) and to combine the identified load data sets (104-1, 104-2, 204-1, 204-2, 304-1, 304-2) into a combined load data (110, 210, 310);
wherein the load data monitor (102, 202, 302) is configured to provide the combined load data (110, 210, 310) to the at least one radio access network (RAN) for transmission in the load data signal (LDSI) of the at least one broadcast network (BCN).

2. Network manager (100, 200, 300) according to claim 1, wherein the load data monitor (102, 202, 302) is configured to combine the identified load data sets (104-1, 104-2, 204-1, 204-2, 304-1, 304-2) into a single load data stream; and/or
wherein the data interface (101, 201, 301) is configured to communicatively couple to at least two different load data source networks (LDSN), wherein the load data monitor (102, 202, 302) is configured to identify load data comprising similar content in the two different load data source networks (LDSN).

3. Network manager (100, 200, 300) according to claim 2, wherein the load data monitor (102, 202, 302) is configured to provide a data offloading request (225, 325) to the at least two load data source networks (LDSN) if load data with similar content is identified; and
especially wherein the load data monitor (102, 202, 302) is configured to combine the identified load data into a combined load data (110, 210, 310), and provide the combined load data (110, 210, 310) to the at least one radio access network (RAN), if an acknowledgment is received by the load data monitor (102, 202, 302) in response to the data offloading request (225, 325).

4. Network manager (100, 200, 300) according to any one of the preceding claims, wherein the load data monitor (102, 202, 302) is configured to combine the load data with similar content by selecting one of the identified load data sets (104-1, 104-2, 204-1, 204-2, 304-1, 304-2) and providing the selected load data set (104-1, 104-2, 204-1, 204-2, 304-1, 304-2) as combined load data (110, 210, 310).

5. Network manager (100, 200, 300) according to any one of the preceding claims, comprising a data transcoder (226, 326) communicatively coupled to the load data monitor (102, 202, 302) and configured to transcode load data; and
wherein the load data monitor (102, 202, 302) is configured to combine the load data with similar content by providing the load data sets (104-1, 104-2, 204-1, 204-2, 304-1, 304-2) with similar content to the transcoder for transcoding the identified load data and by providing the transcoded load data as combined load data (110, 210, 310).

6. Network manager (100, 200, 300) according to any one of the preceding claims, wherein the load data monitor (102, 202, 302) is configured to combine the load data with similar content by separating in every load data set (104-1, 104-2, 204-1, 204-2, 304-1, 304-2) different data streams of different stream types, and selecting for a first stream type one of the data streams and providing the selected data stream in the combined load data (110, 210, 310) and for the other stream types providing all data streams in the combined load data (110, 210, 310).

7. Network manager (100, 200, 300) according to any one of the preceding claims, wherein the load data monitor (102, 202, 302) is configured to combine the load data with similar content section wise, and to provide combined load data (110, 210, 310) for combination sections and the original load data for non-combination sections.

8. Network manager (100, 200, 300) according to any one of the preceding claims, wherein the load data monitor (102, 202, 302) is configured to adjust load data information for the load data sets (104-1, 104-2, 204-1, 204-2, 304-1, 304-2) when combining the load data;
wherein the load data information refers especially to at least one of a load data quality, a frequency or frequency range or bandwidth of the load data signal (LDSI), a data rate of the load data signal (LDSI), and a target application on the receiving device.

9. Method for managing a broadcast network (BCN), the method comprising:
identifying (S1) different load data sets (104-1, 104-2, 204-1, 204-2, 304-1, 304-2) with similar content in at least one load data source network (LDSN);
combining (S2) the identified load data sets (104-1, 104-2, 204-1, 204-2, 304-1, 304-2) into a combined load data (110, 210, 310); and
providing (S3) the combined load data (110, 210, 310) to at least one radio access network (RAN) of the broadcast network (BCN) for transmission in the load data signal (LDSI) of the broadcast network (BCN).

10. Method according to claim 9, wherein the identified load data is combined into a single load data stream; and/or
wherein load data comprising similar content is identified in two different load data source networks (LDSN).

11. Method according to claim 10, wherein a data offloading request (225, 325) is provided to the at least two load data source networks (LDSN) if load data with similar content is identified; and
especially wherein the identified load data is combined into a combined load data (110, 210, 310) and provided to the at least one radio access network (RAN), if an acknowledgment is received in response to the data offloading request (225, 325).

12. Method according to any one of the preceding method-based claims, wherein the load data sets (104-1, 104-2, 204-1, 204-2, 304-1, 304-2) with similar content are combined by selecting one of the identified load data sets (104-1, 104-2, 204-1, 204-2, 304-1, 304-2) and providing the selected load data set (104-1, 104-2, 204-1, 204-2, 304-1, 304-2) as combined load data (110, 210, 310).

13. Method according to any one of the preceding method-based claims, comprising transcoding the identified load data sets (104-1, 104-2, 204-1, 204-2, 304-1, 304-2); and
providing transcoded load data as combined load data (110, 210, 310).

14. Method according to any one of the preceding method-based claims, wherein the load data with similar content is combined by separating in every load data different data streams of different stream types, and selecting for a first stream type one of the data streams and providing the selected data stream in the combined load data (110, 210, 310) and for the other stream types providing all data streams in the combined load data (110, 210, 310); and/or
wherein the load data with similar content is combined section wise, and wherein combined load data (110, 210, 310) is provided for combination sections and the original load data is provided for non-combination sections.

15. Method according to any one of the preceding method-based claims, wherein load data information is adjusted for the load data when combining the load data;
wherein the load data information refers especially to at least one of a load data quality, a frequency or frequency range or bandwidth of the load data signal (LDSI), a data rate of the load data signal (LDSI), and a target application on the receiving device.
